# EUROPEAN PATENT APPLICATION

(11) **EP 0 899 938 A2**
(43) Date of publication of application: **03.03.1999**
(21) Application number: 98306966.7
(22) Date of filing: 28.08.1998
(51) Int. Cl.: H04N 1/04

(54) **Multifunctional machine for scanning and printing use and a scanning and printing method used in the multifunctional machine**

(30) Priority: 29.08.1997 KR 9742789
(71) Applicant: Samsung Electronics Co., Ltd., Suwon-City, Kyungi-do (KR)
(72) Inventor: Kim, Young-hoon, Songpa-gu, Seoul (KR); Han, Ji-hoon, Nowon-gu, Seoul (KR)
(74) Representative: Sanderson, Nigel Paul

(57) **Abstract**

Disclosed are a multifunctional machine for scanning and printing use and a scanning and printing method used in the multifunctional machine capable of reducing the volume of the multifunctional machine and reducing data amount regarding parts other than a document when scanning a document smaller than a reference size document. The document (300a) or a printable medium (300) is fed in a first direction by a feeding unit. A scanner module (110) scans the document (300a) by performing shuttle movement in a main scanning direction perpendicular to the first direction and a printer module (120) is established next to the scanner module (110) in the first direction and prints data onto the printable medium (300). In addition, a white panel (115) is located facing the bottom side of the scanner module (110) in the main scanning direction and a black panel (125) is located facing the bottom side of the printer module (120) in the main scanning direction.

## Description

### BACKGROUND OF THE INVENTION

### Field of the Invention

The present invention relates to a multifunctional machine for scanning and printing use and a scanning and printing method used in the multifunctional machine and, more particularly to such a machine and method capable of reducing the volume of the multifunctional machine and of reducing the amount of data regarding parts or areas other than a document when scanning a document smaller than a reference size document.

### Description of the Related Art

Recently, the office automation environment has progressed rapidly in step with the development of information-communication industry. Office automation facilities, for instance, copiers which produce scanned image data, facsimile devices having a data transmission function which receive and send facsimile image data through a long distance communication, and scanners which process an image such as a document or a photograph have been continuously developed and supplied.

As office automation devices each having a separate function are each located within an office, a substantial amount of space is required in total and the working efficiency of an operator is degraded. In order to solve the above problems, a multifunctional machine integrating a number of functional units has been introduced, which generally performs the functions of a scanner, facsimile and the printer.

However, in the multifunctional machine having the functions of a scanner, facsimile and a printer, an unexpected deficiency can occurr due to the reciprocal operations of the functions.

Here, after explaining the structures and operations of a single scanner and a printer, the multifunctional machine integrating the scanner and printer and the problems which occurr in the multifunctional machine are explained.

In the case of the scanner, when light is illuminated on to a document and a charged coupled device (CCD) sensor scans the light reflected from the document, image processing is performed based on the scanned data. Here, the CCD sensor senses the difference of the reflectability between the document and characters printed on the document with ink. When scanning a document smaller than a reference size document through the above scanner, in order to prevent parts other than the document from being recognized as data and thereby from being printed black, a white panel which has generally the same color with a background color of the document is generally located at parts beyond the edge of the document where the light is radiated.

In addition, in the case of the ink-jet printer, characters or figures are printed by spraying ink onto a printable medium through a nozzle driving unit according to a print signal which is processed corresponding to a print data of a connected computer. At this time, a black panel which generally has the same color as the black ink is generally located at the rear surface of the printable medium. The black panel is located to prevent a change of color even if parts of the panel located beyond the edge of the printable medium are contaminated, when the ink is sprayed through the ink nozzle.

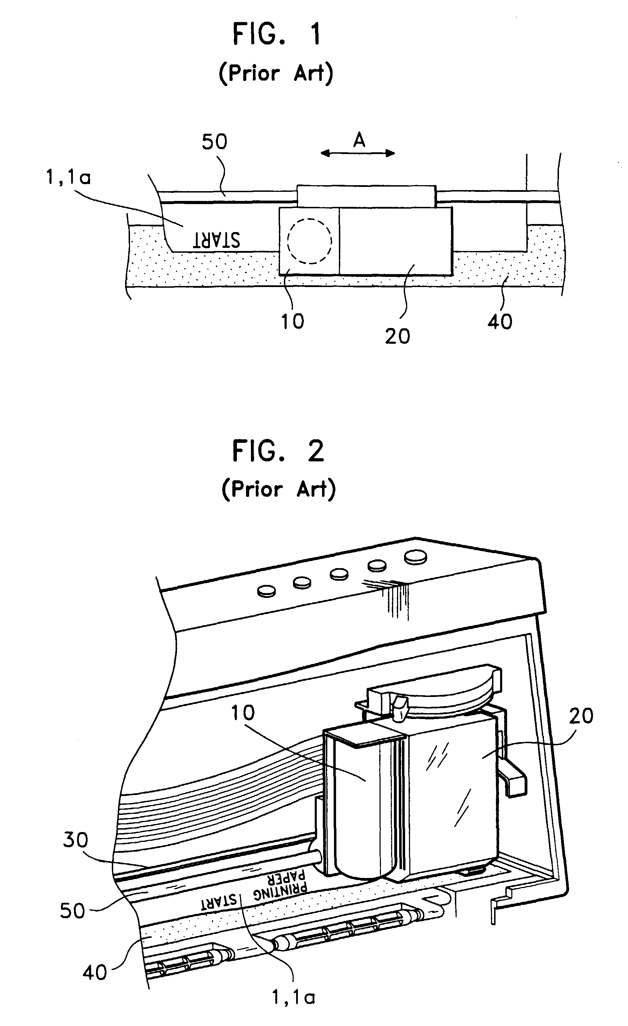

FIG. 1 is a plan view illustrating a combined module of a multifunctional machine integrating the scanner and printer; and FIG. 2 is a perspective view of FIG. 1.

Conventionally, the multifunctional machine includes a shuttle scanner module 10 which inputs light reflected by radiating a certain light to the document, for processing an image of the document la, to the CCD sensor; and a shuttle ink-jet head module 20 which is located next to the shuttle scanner module 10 and performs printing operation by spraying ink onto the printable medium 1 according to the printing signal.

The shuttle scanner module 10 and the ink-jet head module 20 are connected to a common timing belt 30. The timing belt 30 is connected to a pair of driving pulley (not illustrated) and driven pulley. Here, in accordance with the rotating direction of the driving pulley, the shuttle scanner module 10 and the shuttle ink-jet head module 20 perform a rectilinearly reciprocating motion along a guide rail 50.

As shown in FIG. 1, assuming that the driving direction A of the timing belt 30 which is indicated with an arrow is defined as a main scanning direction, the shuttle scanner module 10 and the shuttle ink-jet head module 20 are connected to the timing belt 30 in parallel to the main scanning direction, as described above. The black panel 40 is located facing the shuttle scanner module 10 and the shuttle ink-jet head module 20. The white panel may become contaminated by the ink sprayed by the shuttle ink-jet head module, in the case that the white panel is located facing the shuttle scanner module 10.

As described, when one of the printable medium or the document to be scanned is transported to the black panel 40 by a paper feeding unit, the shuttle scanner module 10 or the shuttle ink-jet head module 20 is operated suitably to the transportation and scanning or printing is selectively performed.

However, the multifunctional machine integrating the scanning and printing functions has following problems.

Since the scanner module and the ink-jet head module are located in parallel to the main scanning direction, the volume of the multifunctional machine increases.

In the case that the document size is smaller than the reference size, parts other than the document are recognized as black, and thereby the data amount increases.

In addition, when printing the document scanned as above, since the parts other than the document la is printed being black, the consumption of toner increases.

In order to prevent the parts other than the document la from being printed as black, there is an inconvenience of covering the parts other than the document la with a separate paper or enlarging the document size, when scanning the document.

### SUMMARY OF THE INVENTION

Therefore, the present invention seeks to reduce the volume of a multifunctional machine and reduce the data amount which is recognized regarding parts other than a document, when scanning the document smaller than a reference size document.

According to one aspect of the present invention, there is provided a multifunctional machine for scanning and printing use comprising:
a paper feeding unit operative to feed a document to be scanned or a printable medium in a first direction;
a scanner module operative to reciprocate along a path perpendicular to the first direction to scan a document
a printer module disposed adjacent to said scanner module and operative to reciprocate along a path perpendicular to the first direction to print data onto said printable medium;
a first panel of a first colour arranged beneath said scanner module along the reciprocating path of said scanner module
a second panel of a second colour arranged beneath said printer module along the reciprocating path of said printer module, wherein
said second colour is darker than said first colour and said printer module is arranged in front of or behind the scanner module with respect to the first direction.

Preferably, the first panel has a white color, and the second panel has a black color.

Preferably, the scanner module is disposed in front or to the rear of the printer module in the first direction.

According to another aspect of the present invention, there is provided a scanning and printing method in a multifunctional machine, which machine comprises
a paper feeding unit operative to feed a document to be scanned or a printable medium in a first direction;
a scanner module operative to reciprocate perpendicularly with respect to said first direction to scan a document
a printer module disposed adjacent to said scanner module in front or behind thereof with respect to the first direction and operative to reciprocate perpendicularly with respect to said first direction to print data onto said printable medium;
a first panel of a first colour arranged beneath said scanner module along the path of said scanner module
a second panel of a second colour darker than said first colour arranged beneath said printer module along the path of said printer module, wherein the method comprises
ascertaining whether a signal inputted to said multifunctional machine is a printing signal or a scanning signal;
in the case that a scanning signal is inputted, transporting said document substantially to the distal edge of said first panel and performing a scanning operation; and
in the case that a printing signal is inputted, transporting said printable medium substantially to the distal edge of said second panel, and performing a printing operation.

### BRIEF DESCRIPTION OF THE DRAWINGS

A more complete appreciation of the present invention, and many of the attendant advantages thereof, will become readily apparent as the same becomes better understood by reference to the following detailed description when considered in conjunction with the accompanying drawings in which like reference symbols indicate the same or similar components, wherein;
FIG. 1 is a plan view illustrating a combined module and a black panel of a conventional multifunctional machine;
FIG. 2 is a perspective view illustrating the front surface of the multifunctional machine having the conventional combined module;
FIG. 3 is a plan view illustrating a combined module and white/black panels according to the present invention;
FIG. 4 is a perspective view illustrating the front surface of the multifunctional machine having the combined module according to the present invention; and
FIG. 5 is a flowchart for illustrating a scanning and printing method in the multifunctional machine according to the present invention.

### DETAILED DESCRIPTION OF THE PREFERRED EMBODIMENTS

The objects, characteristics and advantages of the above-described invention will be more clearly understood through the preferable embodiments referring to the attached drawings.

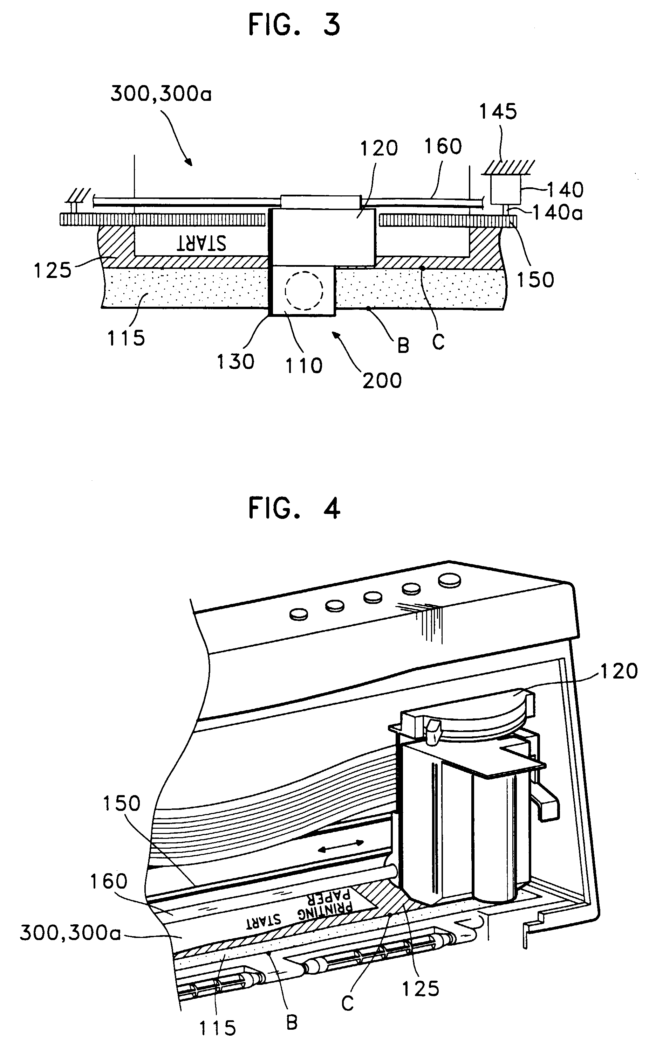

Referring to FIGs. 3 and 4, a multifunctional machine for scanning and printing use according to one embodiment of the present invention is explained.

In the multifunctional machine, a combined module unit 200 is located in a combined module case 130. The combined module unit 200 includes a shuttle scanner module 110 which performs a predetermined image processing by scanning a document; and a shuttle ink-jet head module 120 which performs a printing operation by spraying ink in accordance with data transmitted through a public switched telephone network (PSTN) or printing data inputted from a computer connected to the outside through an interface unit.

In addition, the multifunctional machine further includes a driving unit which enables the combined module unit 200 to perform the reciprocating (shuttle) movement; various control programs required in operating the multifunctional machine; a memory unit in which various data generated in processing the control programs are stored; a central processing unit (CPU) which controls each part of the multifunctional machine according to the control programs; and a paper feeding unit which feeds a document or a printable medium.

The driving unit for driving the combined module unit 200 includes a driving pulley which is connected to a shaft 140a of a carriage return motor 140 attached to a housing 145 and which rotatably drives the shaft 140a; and a driven pulley which is spaced apart from the driving pulley by a certain distance and receives power being subordinated to the driving direction of the driving pulley.

In addition, the driving pulley and driven pulley are connected to a timing belt 150 which converts the rotation movement of the carriage return motor 140 into the rectilinearly reciprocating movement and transmits power of the driving pulley to the driven pulley. The combined module case 130 of the combined module unit 200 is slidably connected to a guide rail 160 formed in the direction in which the timing belt 150 performs the rectilinearly reciprocating movement so that the combined module unit 200 can stably perform the rectilinearly reciprocating movement by means of the power transmitted by the timing belt 150.

Here, assume that the direction to which the combined module unit 200 performs the rectilinearly reciprocating movement is a main scanning direction.

The paper feeding unit (not illustrated) includes a line feed motor which feeds the printable medium 300 or document 300a to the bottom side of the combined module unit 200 in a first direction which is perpendicular to the main scanning direction; and a paper feeding roller (not illustrated) which feeds the printable medium 300 or document 300a by the frictional force with its both surfaces being pressed. Accordingly, the printable medium 300 or the document 300a fed into the combined module unit 200 can be printed or scanned per unit of line.

The structure of the combined module unit 200 is explained in detail.

As described above, in the combined module unit 200, the shuttle scanner module 110 and the ink-jet head module 120 are located in the combined module case 130. The shuttle scanner module 110 and the ink-jet head module 120 are arranged in line in the first direction which is the feeding direction of the document 300a to be scanned or the printable medium 300.

As a result, the volume of the multifunctional machine can be reduced by locating the scanner module 110 and ink-jet head module 120 in line in the first direction rather than locating them side by side in the main scanning direction.

In addition, beneath the combined module unit 200, a white panel 115 and a black panel 125 are successively located. That is, a panel 115 having a similar colour (eg white) to the colour of the document to be scanned is disposed opposite the lower end of the scanner module 110 extending along the length of the path along which the scanner module 110 reciprocates, and, a black panel 125 is disposed opposite the lower end of the ink-jet head module 120 along the length of the path along which the ink-jet module 120 reciprocates.

Accordingly, in the case that a document having a size smaller than a reference size of the scanner module is fed, the white panel 115 is exposed at parts other than the document, that is, beyond the edge of the document and the white panel 115 is scanned. As a result, the data amount to be processed can be reduced by recognizing the parts where the white panel 115 is exposed as being white. In addition, in the case of printing the scanned image, as the parts other than the document are printed being recognized as white, a clean printed image can be obtained.

Since the black panel 125 is established facing the bottom side of the shuttle ink-jet head module 120, even where the panel is contaminated by the ink sprayed from the ink-jet head module 120, the appearance of stains caused by the ink can be prevented.

Moreover, since the shuttle scanner module 110 and the shuttle ink-jet head module 120 are arranged in line in the first direction, the positions where the printing and scanning are performed are different each other. As a result, the positions where the document 300a to be scanned and the printable medium 300 are fed are different.

In other words, in the case of scanning the document, the central processing unit controls the line feed motor of the paper feeding unit to enable the document to be fed up to an end part B of the white panel 115. In the case of printing, the central processing unit controls the line feed motor to enable the printable medium to be fed up to an end part C of the black panel 125.

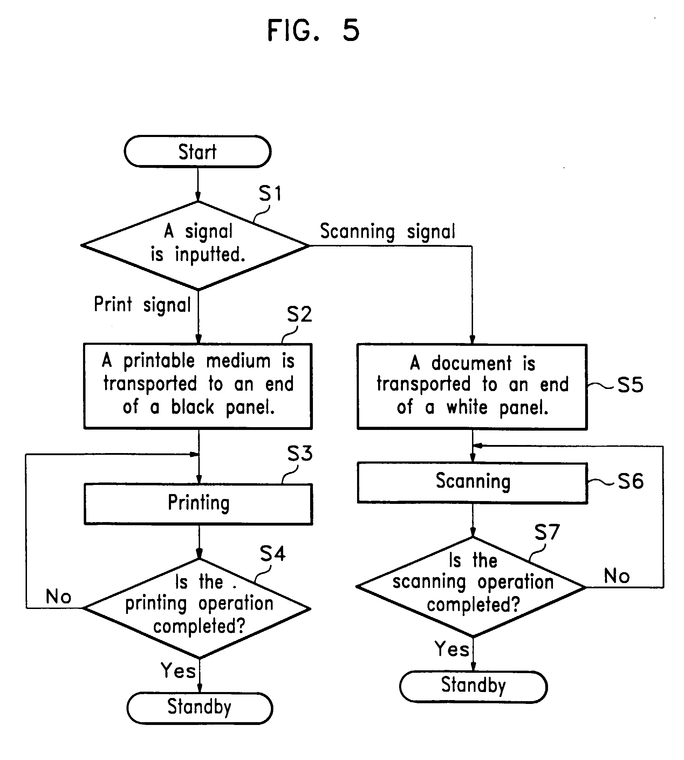

A scanning and printing method of the multifunctional machine for scanning and printing use according to one embodiment of the present invention is explained with reference to FIG. 5.

First, it is judged whether an inputted signal is a print signal for printing a print data or a fax data or a scanning signal for scanning an image of the document 300a (step 1).

In the case of the print signal, the central processing unit controls the line feed motor of the paper feeding unit to enable the printable medium 300 to be transported up to the end part B of the black panel 125 (step 2).

When the printable medium 300 is positioned at the end part C of the black panel 125, the print operation is performed by spraying ink from the shuttle ink-jet head module 120 of the combined module unit 200 suitably to the print data or fax data (step 3).

Afterwards, it is judged whether the printing operation is completed (step 4). When the printing operation is completed, the multifunctional machine is in a standby state. In the case that the printing operation is not completed, the printing is continuously performed by returning to step 3.

On the other hand, the scanning signal is inputted at step 1, the central processing unit controls the line feed motor to enable the document 300a to be transported up to the end part B of the white panel 115 (step 5).

When the document 300a is fed up to the end part B of the white panel 115, the carriage return motor 140 operates and the combined module unit 200 performs the shuttle movement, and thereby the shuttle scanner module 110 scans the document (step 6).

At this time, even if the document size is smaller than the reference document size, the white panel 115 is scanned at the parts other than the document 300a.

Afterwards, it is judged whether the scanning operation is completed (step 7). When the scanning operation is completed, the multifunctional machine is in a standby state. In the case that the scanning operation is not completed, the scanning is continuously performed by returning to step 6.

In the preferred embodiment of the present invention, the scanner module is located in front and the ink-jet head module is located in the rear in the direction to which the document or the printable medium is fed. It is also possible to locate the scanner module in front and the ink-jet head module in the rear. In the latter case, the positions of the white panel and black panel are changed each other.

While there have been illustrated and described what are considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

## Claims

1. A multifunctional machine for scanning and printing use comprising:
a paper feeding unit operative to feed a document (300a) to be scanned or a printable medium (300) in a first direction;
a scanner module (110) operative to reciprocate along a path perpendicular to the first direction to scan a document
a printer module (120) disposed adjacent to said scanner module (110) and operative to reciprocate along a path perpendicular to the first direction to print data onto said printable medium (300) ;
a first panel (115) of a first colour arranged beneath said scanner module along the reciprocating path of said scanner module (110)
a second panel (125) of a second colour arranged beneath said printer module (120) along the reciprocating path of said printer module (120), wherein
said second colour is darker than said first colour and said printer module (120) is arranged in front of or behind the scanner module (110) with respect to the first direction.

2. A multifunctional machine as claimed in claim 1, wherein said first panel (115) has a white colour.

3. A multifunctional machine as claimed in claim 1 or 2, wherein said second panel (125) has a black color.

4. A multifunctional machine as claimed in any of claims 1,2 or 3 wherein said scanner module (110) is disposed in front of said printer module (120) in said first direction.

5. A multifunctional machine as claimed in any of claims 1, 2 or 3 wherein said scanner module (110) is disposed to the rear of said printer module (120) in said first direction.

6. A multifunctional machine as claimed in any preceding claim comprising an integral printer and scanner module (200).

7. A scanning and printing method in a multifunctional machine, which machine comprises
a paper feeding unit operative to feed a document (300a) to be scanned or a printable medium (300) in a first direction;
a scanner module (110) operative to reciprocate perpendicularly with respect to said first direction to scan a document (300a)
a printer module (120) disposed adjacent to said scanner module (110) in front or behind thereof with respect to the first direction and operative to reciprocate perpendicularly with respect to said first direction to print data onto said printable medium (300) ;
a first panel (115) of a first colour arranged beneath said scanner module (110) along the path of said scanner module (110)
a second panel (125) of a second colour darker than said first colour arranged beneath said printer module (120) along the path of said printer module (120), wherein the method comprises
ascertaining whether a signal inputted to said multifunctional machine is a printing signal or a scanning signal;
in the case that a scanning signal is inputted, transporting said document (300a) substantially to the distal edge of said first panel (115) and performing a scanning operation; and
in the case that a printing signal is inputted, transporting said printable medium (300) substantially to the distal edge of said second panel (125), and performing a printing operation.
